# EUROPEAN PATENT APPLICATION

(11) **EP 4 632 900 A1**
(43) Date of publication of application: **15.10.2025**
(21) Application number: 24169461.1
(22) Date of filing: 10.04.2024
(51) Int. Cl.: H01M 50/209, H01M 50/224, H01M 50/242, H01M 50/244, H01M 50/249, H01M 50/289

(54) **BATTERY SYSTEM WITH IMPROVED END SPACER**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery system (100) including a plurality of battery cells (12) arranged to form a cell stack (10), and a cell stack frame (20) accommodating the cell stack (10), wherein the cell stack frame (20) includes at least one end plate (22) exerting a pressure onto the cell stack (10), wherein a deformable end spacer (30) is arranged between the cell stack (10) and the at least one end plate (22), the deformable end spacer (30) being compressed by the pressure exerted by the end plate (22), wherein the deformable end spacer (30) includes two parallel plate elements (32), and a metal foam (34) and/or a metal honeycomb structure disposed in between the plate elements (32), wherein the plate elements (32) have a different material composition than the metal foam (34) and/or the metal honeycomb structure, wherein the metal foam (34) is an aluminum foam and/or wherein the metal honeycomb structure is an aluminum honeycomb structure, and wherein the plate elements (32) are steel plate elements.

## Description

### Field of the Disclosure

The present disclosure relates to a battery system with an improved end spacer. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a highpower rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The battery cells of a battery pack may be arranged to form a cell stack by stacking the battery cells onto each other or arranging the battery cells in a row. Neighboring battery cells of a cell stack may be distanced from one another via cell spacers. The cell stack may be placed inside a cell stack frame delimiting the battery cells to the outside. End spacers may be disposed at one or both ends of the cell stack as a buffer between the cell stack and the cell stack frame. To ensure optimal operation of the battery cells over their lifetime, it is important that a predefined pressure is exerted onto the battery cells by the cell stack frame to compensate for possible production tolerances and swelling of the battery cells.

Current battery systems typically include cell stack frames with end plates exerting pressure onto the cell stack, possibly via an end spacer, with a rigid linear or progressive elastic pressure characteristic. A disadvantage of such rigid frameworks may be the susceptibility to length or positioning deviations because a small displacement may cause a steep increase or decrease of force applied on the cell stack, which in turn may reduce the stacks performance. To mitigate this, very precise and therefore expensive production tolerances have to be met, or other costly and intricate ways of adjusting the cell stacks pre-tension via positioning of the end plate during assembly have to be implemented. Such cell stack frames may not be able to ensure that the right amount of pressure is applied to the cell stack over its entire lifetime.

It may thus be an object of the present application to provide a battery system with an improved cell stack frame ensuring the right pressure conditions for optimal operation of the battery cells over their entire lifetime.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system includes a plurality of battery cells arranged to form a cell stack, and a cell stack frame accommodating the cell stack, wherein the cell stack frame includes at least one end plate exerting a pressure onto the cell stack, wherein a deformable end spacer is arranged between the cell stack and the at least one end plate, the deformable end spacer being compressed by the pressure exerted by the end plate, wherein the deformable end spacer includes two parallel plate elements, and a metal foam and/or a metal honeycomb structure disposed in between the plate elements, wherein the plate elements have a different material composition than the metal foam and/or the metal honeycomb structure, wherein the metal foam is an aluminum foam and/or wherein the metal honeycomb structure is an aluminum honeycomb structure, and wherein the plate elements are steel plate elements.

According to another aspect of the present disclosure, the end spacer, under nominal compression, has a thickness that is substantially the same as the thickness of one of the battery cells.

According to another aspect of the present disclosure, the metal foam has a porosity of about 80% to about 90%, for example about 85%.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment, the battery system including an end spacer according to the disclosure.
- Fig. 2: illustrates a schematic side view or cross view of the end spacer of the battery system of Fig. 1.
- Fig. 3: illustrates three schematic top views of different embodiments of battery systems having different cell stack lengths.
- Fig. 4: illustrates a diagram showing a force to elongation (displacement) ratio for the battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row. Cell spacers may be disposed inbetween adjacent or neighboring battery cells. Thus, neighboring battery cells of the cell stack may be distanced from one another via a cell spacer. The cell stack may form one or more battery packs.

The cell stack is disposed inside a cell stack frame. The cell stack frame includes at least one end plate that exerts a pressure onto the cell stack. The cell stack frame may include two end plates and two side walls connecting the end plates, wherein one or both of the end plates may exert a pressure onto the cell stack. The cell stack arranged inside the cell stack frame may thus be delimited from four sides by the end plates and side walls. The cell stack frame may further include a top cover and a bottom cover such that the cell stack may be delimited from all six sides. The at least one end plate may be fixed to the side walls (and/or the top cover and bottom cover), for example riveted or screwed. The at least one end plate may be rigid, i.e. non-deformable. The cell stack frame may delimit the cell stack to an outside, i.e. to an environment of the cell stack. The at least one end plate may form an outer delimitation of the cell stack frame. Also, the other end plate and/or the side walls may form the outer delimitation of the cell stack frame. In other words, the cell stack frame, e.g. the two end plates and two side walls, may delimit an interior space of the cell stack frame from the exterior, wherein in said interior space the cell stack is arranged.

A deformable end spacer is arranged between the cell stack and the at least one end plate. Thus, the deformable end spacer is arranged inside the interior space delimited by the cell stack frame. The end plate, in the mounted position, exerts a pressure onto the cell stack via the deformable end spacer thereby compressing, i.e. deforming, the deformable end spacer. The end plate may exert such pressure onto the cell stack via the deformable end spacer while being supported or fixed to other parts of the cell stack frame, e.g. to the side walls. The cell stack frame thus provides a pre-tensioning of the cell stack. In an embodiment, the cell stack frame includes two end plates at opposite ends of the cell stack frame, wherein such a deformable end spacer is disposed on both ends of the cell stack between the respective end of the cell stack and the respective end plate. The deformable end spacer may have a shape, e.g. a rectangular shape, corresponding to a shape of an interior space of the cell stack frame that accommodates the cell stack.

The deformable end spacer includes two parallel plate elements and one or more of the following: a metal foam, a metal honeycomb structure. In other words, the deformable end spacer includes a metal foam, or the deformable end spacer includes a metal honeycomb structure, or the deformable end spacer includes a metal foam and a metal honeycomb structure. For example, a first layer of the deformable end spacer may include, or consist of, the metal foam and a second layer of the deformable end spacer may include, or consist of, the metal honeycomb structure. A metal foam is a material or structure consisting of a solid metal with gas-filled pores including a large portion of the volume. The metal foam may have an open-cell structure where the pores may be interconnected, or a closed-cell structure where the pores may be closed/sealed. The metal foam and the metal honeycomb structure may exhibit an advantageous deformation characteristic making them suitable for the use as an end spacer as explained in the following.

Due to the metal foam/ metal honeycomb structure, the deformable end spacer is adapted to be, at lower compression forces, elastically deformed and to be, at higher compression forces, plastically deformed. The metal foam and the metal honeycomb structure may exhibit a suitable deformation characteristic for ensuring that the pressure onto the cell stack, i.e. the compression force acting onto the cell stack, is substantially constant over the lifetime of the cell stack. Thus, in contrast to current battery systems which may exhibit a rigid linear or progressive elastic pressure characteristic, the battery system according to the disclosure has, due to the deformable end spacer, a constant deformation characteristic in the relevant force range. In other words, the end plate, due to the deformable end spacer, may exert a constant compression force onto the cell stack in the relevant, advantageous pre-tensioning force range for prismatic or pouch type cells. Inevitable tolerances for both the elements of the cell stack as well as the elements of the cell stack frame can be compensated by the inherent deformation ability of the deformable end spacer. This may eliminate the need of additional shimming or other adjustment work during cell stacking. Further, any swelling (which may e.g. be due to ageing) of the battery cells of the cell stack may also be compensated. Also, loads which may occur during accidents may be compensated. Due to said tolerances and swelling, a length of the cell stack may vary. However, due to the deformable end spacer, the end plate may exert substantially the same pressure onto the cell stack independent of the length of the cell stack. Thus, the cell stack may be kept in the optimum range of pressure for peak performance ensuring reliable and safe operation through all its life cycle until end of life. Thus, in summary, the battery system is capable of compensating production tolerances as well as swelling forces/displacements of the battery cells over the lifetime of the battery system because the deformable end spacer is adapted to maintain a substantially constant pressure.

The metal foam is an aluminum (Al) foam. The metal honeycomb structure is an aluminum (Al) honeycomb structure. Thus, the metal foam and/or metal honeycomb structure include or consist of aluminum. The metal foam may be a metal alloy foam, i.e. the metal foam may be made of a metal alloy. The metal alloy may include aluminum. The metal foam may be a composite metal foam made from a combination of hollow metal spheres and a metallic matrix surrounding the spheres. Aluminum may be suitable as it is lightweight.

The end spacer includes two parallel plate elements, wherein the metal foam and/or metal honeycomb structure is disposed in between the plate elements. In other words, the metal foam and/or metal honeycomb structure is sandwiched between the two plate elements. A first plate element may face the end plate and the second plate element may face the cell stack. The plate elements may have the same material composition as the metal foam and/or metal honeycomb structure, for example the plate elements may include, or consist of, aluminum. The plate elements may be rigid, i.e. non-deformable. The plate elements may provide suitable contact surfaces for the end plate and the cell stack. For example, the plate elements may contact the end plate and cell stack in a large area such that the force/pressure exerted by the end plate is transferred uniformly. That is, the force/pressure exerted by the end plate may be transferred uniformly from the end plate to the first plate element, from the first plate element to the metal foam and/or honeycomb structure, from there to the second end plate and finally from the second end plate to the cell stack. Nevertheless, the metal foam and/or metal honeycomb structure may exhibit their intended deformation characteristic.

The plate elements have a different material composition than the metal foam and/or metal honeycomb structure. That is, the plate elements are steel plate elements, while the metal foam and/or metal honeycomb structure include or are made of aluminum. The plate elements having a different material composition than the metal foam and/or metal honeycomb structure may provide for a more stable structure while maintaining the intended deformation characteristic.

According to an embodiment, the end spacer, under nominal compression, has a thickness (e.g. an extension along a stacking axis) that is substantially the same as the thickness of one of the battery cells. Nominal compression may mean a compression value or range that the end plate exerts onto the cell stack during nominal operation conditions, e.g. before any age-related swelling of the battery cells. Adapting the thickness of the end spacer to the thickness of the battery cells may ensure the intended deformation characteristic. For example, thicker battery cells may increase more in thickness than thinner battery cells due to age-related swelling. Therefore, a thicker end spacer may be provided to the thicker battery cells and a thinner end spacer for the thinner battery cells.

According to an embodiment, the metal foam has a porosity of about 80% to about 90%, for example about 85%. Such a porosity range or values may prove suitable for providing the intended deformation characteristic.

The disclosure also pertains to an electric vehicle including a battery system according to the disclosure, i.e. a battery system as explained above.

According to one aspect of the present disclosure, a method for assembling a battery system according to the disclosure, i.e. a battery system as explained above, may be provided. Therein, in a first alternative, the cell stack frame may be provided with the end plate placed in its fixture/mounting position and the deformable end spacer disposed adjacent to the end plate. For example, the end plate may in the fixture/mounting position be fixed to the side walls of the cell stack frame as explained above. Subsequently, the cell stack may be compressed and then be inserted, in its pre-compressed state, into the cell stack frame with the end plate already at its fixture/mounting position. The cell stack may then be released and may expand until in contact with the deformable end spacer such that the end plate exerts a pressure onto the cell stack via the deformable end spacer. In a second alternative, the cell stack frame may be provided without the end plate placed in its fixture/mounting position. The cell stack may then be inserted into the cell stack frame without pre-compression. Subsequently, the deformable end spacer may be placed next to the cell stack, and then the end plate may be placed in its fixture/mounting position thereby compressing the cell stack, i.e. exerting a pressure onto the cell stack via the deformable end spacer.

### Specific Embodiments

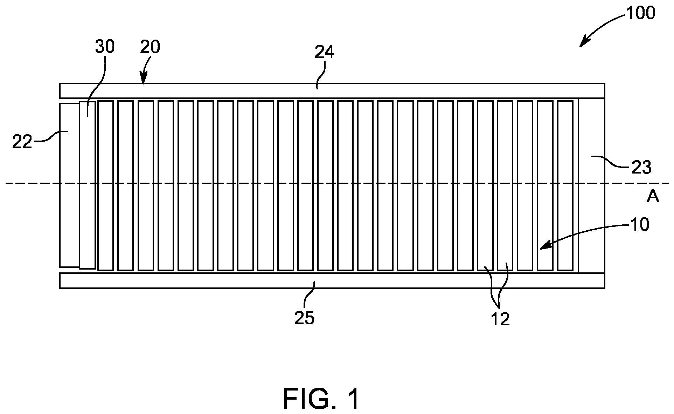

Fig. 1 illustrates a schematic top view of a battery system 100 according to an embodiment. The battery system 100 includes a plurality of battery cells 12 arranged to form a cell stack 10, and a cell stack frame 20 accommodating the cell stack 10. The battery cells 12 are stacked or arranged along a stacking axis A.

The cell stack frame 20 includes two end plates 22, 23 and two side walls 24, 25 connecting the end plates 22, 23. The end plates 22, 23 and side walls 24, 25 delimit the cell stack 10 from four sides as shown in Fig. 1. The cell stack frame 20 may further include a top cover (not shown) and a bottom cover (not shown) to completely encase the cell stack 10. The end plates 22, 23 may be fixed to the side walls 24, 25 on opposite sides e.g. via screws or rivets (not shown).

A deformable end spacer 30 is placed between the end plate 22 and the cell stack 10. The deformable end spacer 30 has a rectangular shape corresponding to a shape of an interior space of the cell stack frame 20 that accommodates the cell stack 10.

Due to production tolerances of the battery cells 12 and possibly of any cell spacers (not shown) arranged in between the battery cells 12, the length of the cell stack 10 may vary. That is, it may occur during production that not all produced cell stacks have the same length. Also, the battery cells 12 of the cell stack 10 may swell due to ageing thereby expanding along the axis A and thus increasing the length of the cell stack 10. The cell stack frame 20 according to the disclosure may compensate these different lengths of the cell stack 10 because of the deformable end spacer 30.

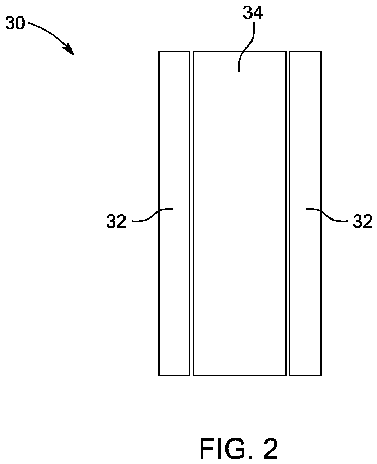

Referring to Fig. 2, the deformable end spacer 30 includes two parallel plate elements 32 and a metal foam 34 disposed in between the plate element 32.

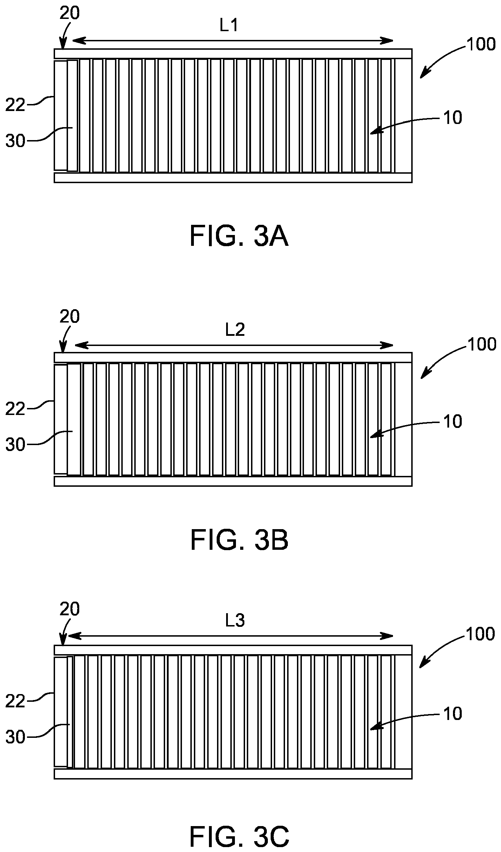

As shown in Fig. 3, the deformable end spacer 30 is deformed to different degrees depending on the cell stack length. In Fig. 3a the cell stack 10 has a first length L1, in Fig. 3b the cell stack 10 has a second length L2, and in Fig. 3c the cell stack 10 has a third length L3, wherein the second length L2 may be a minimal length, the third length L3 a maximum length, and the first length L1 a nominal length, i.e. L3 > L1 > L2. For the cell stack 10 having the minimal length L2, the deformable end spacer 30 is deformed only slightly, see Fig. 3b. For the cell stack 10 having the maximum length L3, the deformable end spacer 30 is deformed heavily, see Fig. 3c. For the cell stack 10 having the nominal length L1, the deformable end spacer 30 is deformed moderately, see Fig. 3a. Nevertheless, the end plate 22 may exert substantially the same pressure onto the cell stack 10 independent of the length of the cell stack 10 thanks to the deformable end spacer 30. The battery system 100 with its deformable end spacer 30 may thus be suited to ensure the right pressure conditions for optimal operation of the battery cells 12 over their entire lifetime.

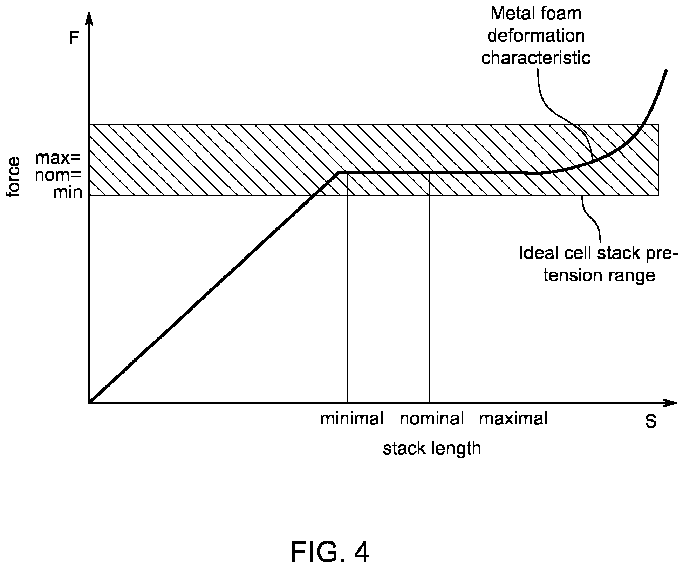

In contrast to current battery systems which may exhibit a rigid linear or progressive elastic pressure characteristic, the battery system according to the disclosure has, due to the deformable end spacer 30, at lower compression forces, an elastic deformation characteristic and, at higher compression forces, a plastic deformation characteristic. The plastic deformation characteristic has a flat force-displacement-inclination in the relevant, advantageous pre-tensioning force range for prismatic or pouch type cells as shown in Fig. 4.

Fig. 4 illustrates a diagram showing a force F to elongation (displacement) s ratio for the deformable end spacer 30 including the metal foam. As shown, the exerted force F increases linearly (elastic deformation) with the elongation s (and thus stack length L) in a first section, at lower forces, and stays constant (plastic deformation) in a second section, at higher forces. The force (and thus the pressure) exerted by the end plate 22 is regulated by the deformable end spacer 30 such that the force stays within a window or range of an ideal cell stack pre-tension for the different cell stack lengths of Fig. 4.

Thus, the end plate 22 may, due to the deformable end spacer 30, exert a constant compression force onto the cell stack 10 and is thus capable of compensating production tolerances as well as swelling forces/displacements of the battery cells over the lifetime of the battery system. The end plate 22 and deformable end spacer 30 is designed such that the minmax cell stack tolerances are in the flat plateau area of the force/deflection curve as shown in Fig. 4. The flat plateau may be provided by the plastic deformation of the metal foam until the air is almost pressed out of the foam. Then the foam may get stiffer and stiffer such that the force rises increasingly with the deformation. Thus, the cell stack 10 may be kept in the optimum range of pressure for peak performance ensuring reliable and safe operation through all its life cycle until end of life.

### Reference signs

- 10: cell stack
- 12: battery cells
- 20: cell stack frame
- 22: end plate
- 23: end plate
- 24: side wall
- 25: side wall
- 30: deformable end spacer
- 32: plate elements
- 34: metal foam
- 100: battery system
- A: axis

## Claims

1. A battery system (100), comprising:
a plurality of battery cells (12) arranged to form a cell stack (10); and
a cell stack frame (20) accommodating the cell stack (10),
wherein the cell stack frame (20) comprises at least one end plate (22) exerting a pressure onto the cell stack (10), wherein a deformable end spacer (30) is arranged between the cell stack (10) and the at least one end plate (22), the deformable end spacer (30) being compressed by the pressure exerted by the end plate (22),
wherein the deformable end spacer (30) comprises:
- two parallel plate elements (32); and
- a metal foam (34) and/or a metal honeycomb structure disposed in between the plate elements (32),
wherein the plate elements (32) have a different material composition than the metal foam (34) and/or the metal honeycomb structure,
wherein the metal foam (34) is an aluminum foam and/or wherein the metal honeycomb structure is an aluminum honeycomb structure, and
wherein the plate elements (32) are steel plate elements.

2. The battery system (100) according to claim 1, wherein the deformable end spacer (30), under nominal compression, has a thickness that is substantially the same as the thickness of one of the battery cells (12).

3. The battery system (100) according to claims 1 or 2, wherein the metal foam (34) has a porosity of about 80% to about 90%, for example about 85%.

4. An electric vehicle comprising the battery system (100) according to any one of the preceding claims.
